# DEMANDE DE BREVET EUROPEEN

(11) **EP 4 733 631 A1**
(43) Date de publication de la demande: **29.04.2026**
(21) Numéro de dépôt: 25209277.0
(22) Date de dépôt: 16.10.2025
(51) Int. Cl.: F16H 57/04, F16H 48/10

(54) **SYSTÈME DE TRANSMISSION DE COUPLE**

(30) Priorité: 24.10.2024 FR 2411648
(71) Demandeur: VALEO EMBRAYAGES, 80009 Amiens (FR)
(72) Inventeur: LEBAS, Gilles, 80009 Amiens (FR); COMMEINE, Emmanuel, 80009 Amiens (FR); VIOLA, Paolo, 80009 Amiens (FR)
(74) Mandataire: Valeo Powertrain Systems

(57) **Abrégé**

Système de transmission de couple pour véhicule comprenant :
- un carter de transmission (100) ;
- un train planétaire comprenant un pignon planétaire (4), une couronne dentée extérieure (5), une pluralité de pignons satellites (6) s'engrenant avec le pignon planétaire et la couronne dentée extérieure, et un porte-satellites (7) sur lequel les pignons satellites sont pivotants via des paliers (702), le porte-satellites comportant des conduits (703) configurés pour acheminer un lubrifiant jusqu'aux paliers ;
- un dispositif d'injection (18) comportant au moins un orifice de sortie (181) configuré pour projeter un jet de lubrifiant directement vers les entrées des conduits ;
- un dispositif de collecte (22) fixé sur le porte-satellites et configuré pour collecter une partie du lubrifiant projeté par l'au moins un premier orifice de sortie et pour diriger le lubrifiant vers les entrées des conduits.

## Description

### Domaine technique

La présente invention se rapporte au domaine des systèmes de transmission de couple pour des véhicules motorisés, particulièrement pour des véhicules hybrides ou électriques. L'invention concerne plus précisément la lubrification d'un réducteur de vitesse utilisant un train planétaire.

### Arrière-plan technologique

Le document EP0731291 décrit un système de transmission de couple sous la forme d'un réducteur de vitesse transmettant le couple délivré par une machine électrique tournante aux roues d'un véhicule via un train planétaire et un différentiel disposés de manière coaxiale avec la machine électrique tournante. Une telle disposition coaxiale permet d'améliorer la compacité radiale, notamment en comparaison des réducteurs de vitesse utilisant des engrenages à trains parallèles. L'utilisation d'un train planétaire, et particulièrement un train planétaire comportant des pignons satellites à deux dentures disposées axialement côte à côte, améliore encore la compacité du réducteur de vitesse en permettant l'obtention d'un ratio de réduction élevé dans un encombrement faible.

Cependant, une telle structure de réducteur de vitesse pose plusieurs problèmes techniques, en premier lieu assurer une lubrification satisfaisante et homogène des différents composants internes du réducteur de vitesses. En effet, les composants internes du réducteur de vitesse disposés en grand nombre dans un encombrement restreint rendent certaines zones difficiles d'accès.

Afin d'alimenter en lubrifiant certains composants internes critiques pour la durée de vie du réducteur de vitesses, comme notamment les pignons satellites, un trajet complexe du lubrifiant est mis en place, partant d'une entrée de lubrifiant aménagée dans un arbre d'entraînement du train planétaire, et passant ensuite par plusieurs composants successifs via une pluralité de canaux et/ou par migration en surface desdits composants. Ce trajet complexe de lubrifiant rend alors difficile la maîtrise de la quantité de lubrifiant atteignant les composants internes du réducteur de vitesses. En plus de l'amélioration de la lubrification, le système de transmission de couple doit rester compact, simple et économique à réaliser.

### Résumé

Dans tout ce qui suit, les adjectifs numéraux ordinaux sont utilisés pour différencier les caractéristiques. Ils ne définissent pas la position d'une caractéristique. Par conséquent, par exemple, une troisième caractéristique d'un produit ne signifie pas que le produit possède une première et/ou une deuxième caractéristique.

Une idée à la base de l'invention est un système de transmission de couple qui permet de résoudre un ou plusieurs problèmes techniques de l'art antérieur, par exemple les problèmes susmentionnés.

L'invention concerne un système de transmission de couple pour véhicule comprenant :
- un arbre d'entraînement ayant un axe de rotation ;
- un carter de transmission ;
- un train planétaire comprenant un pignon planétaire, une couronne dentée extérieure, une pluralité de pignons satellites s'engrenant avec le pignon planétaire et la couronne dentée extérieure, et un porte-satellites sur lequel les pignons satellites sont montés pivotants via des premiers paliers, le porte-satellites ou les pignons satellites comportant une pluralité de conduits configurés pour acheminer un lubrifiant depuis des entrées desdits conduits jusqu'aux premiers paliers ; et
- un dispositif d'injection, le carter de transmission comportant une première paroi supportant le dispositif d'injection, le dispositif d'injection comportant au moins un premier orifice de sortie configuré pour projeter un jet de lubrifiant directement vers au moins une des entrées des conduits ;
un dispositif de collecte étant fixé sur le porte-satellites, le dispositif de collecte étant configuré pour collecter une partie du lubrifiant projeté par l'au moins un premier orifice de sortie du dispositif d'injection et pour diriger le lubrifiant vers les entrées des conduits.

L'invention concerne un système de transmission de couple pour véhicule comprenant :
- un arbre d'entraînement ayant un axe de rotation ;
- un carter de transmission ; et
- un train planétaire comprenant un pignon planétaire, une couronne dentée extérieure, une pluralité de pignons satellites s'engrenant avec le pignon planétaire et la couronne dentée extérieure, et un porte-satellites sur lequel les pignons satellites sont montés pivotants via des premiers paliers, le porte-satellites ou les pignons satellites comportant une pluralité de conduits configurés pour acheminer un lubrifiant depuis des entrées desdits conduits jusqu'aux premiers paliers ;
le carter de transmission comportant une première paroi supportant un dispositif d'injection, le dispositif d'injection comportant au moins un premier orifice de sortie configuré pour projeter un jet de lubrifiant directement vers au moins une des entrées des conduits.

Par « directement », on entend ici que le jet de lubrifiant ne touche aucun composant au cours de son parcours entre l'au moins un premier orifice de sortie du dispositif d'injection et l'au moins une entrée des conduits servant à lubrifier les premiers paliers. En d'autres termes, il est possible de tracer un segment de droite partant de l'au moins un premier orifice de sortie du dispositif d'injection et allant jusqu'à l'au moins une entrée des conduits, sans traverser de composants.

L'emploi d'un tel dispositif d'injection permet donc un accès aisé et sans entrave du lubrifiant à l'entrée des conduits, améliorant ainsi la maîtrise de la quantité et du débit de lubrifiant alimentant les premiers paliers.

Selon une caractéristique supplémentaire, aucun composant ne relie l'au moins un premier orifice de sortie du dispositif d'injection avec l'au moins une des entrées des conduits.

L'invention permet ainsi de simplifier avantageusement la structure du système de transmission en évitant la mise en place d'un dispositif de guidage de lubrifiant complexe devant relier une pièce fixe liée au carter de transmission avec une pièce en rotation constituée par les pignons satellites.

Au sens de la présente demande :
- « axialement » signifie « parallèlement à l'axe de rotation» ;
- « radialement » signifie « le long d'un axe appartenant à un plan orthogonal à l'axe de rotation et coupant cet axe de rotation » ;
- « circonférentiellement » signifie « autour de l'axe de rotation » ;
- « lié en rotation » signifie « assemblé de façon à ne pas tourner l'un par rapport à l'autre ». Autrement dit, il s'agit d'une liaison solidaire en rotation, présentant éventuellement un très faible jeu tel qu'un jeu de cannelure ;
- deux pièces sont dites « fixées » lorsqu'elles sont en permanence immobilisées l'une par rapport à l'autre, cette immobilisation pouvant résulter d'une fixation de la première pièce sur la deuxième pièce directement ou par l'intermédiaire d'une ou plusieurs pièces intermédiaires.
- deux pièces sont dites « axialement en vis-à-vis » lorsqu'elles sont toutes traversées par une même surface cylindrique circulaire droite ayant pour axe de révolution l'axe de rotation et décalées les unes par rapport aux autres parallèlement à cet axe de rotation ;

Selon une caractéristique supplémentaire de l'invention, le dispositif d'injection peut comporter une ou plusieurs pièces distinctes sous forme de buses ou d'ajutages ou d'embouts ou d'inserts fixés sur le carter de transmission. Alternativement, le dispositif d'injection peut comporter un ou une pluralité de trous aménagés dans la première paroi du carter de transmission.

La forme et les dimensions du dispositif d'injection permettent d'ajuster la section et la direction du jet de lubrifiant.

Selon une caractéristique supplémentaire de l'invention, la première paroi du carter de transmission est perpendiculaire à l'axe de rotation.

Selon une caractéristique supplémentaire de l'invention, le carter de transmission constitue un logement étanche dans lequel sont logés les composants du système de transmission.

Selon une caractéristique supplémentaire de l'invention, le jet de lubrifiant est injecté par l'au moins un premier orifice de sortie du dispositif d'injection a une pression comprise entre 1 et 20 bar, de préférence une pression comprise entre 1,5 et 6 bar.

Selon une caractéristique supplémentaire de l'invention, le dispositif d'injection est apte à injecter le jet de lubrifiant par l'au moins un premier orifice de sortie du dispositif d'injection a une pression comprise entre 1 et 20 bar, de préférence une pression comprise entre 1,5 et 6 bar.

Le jet de lubrifiant est injecté sous pression. La plage de valeur de pression donnée cidessus est avantageusement adaptée à la structure de l'invention pour être capable de parcourir directement la distance qui sépare l'au moins un premier orifice de sortie du dispositif d'injection de l'au moins une entrée des conduits acheminant le lubrifiant jusqu'aux premiers paliers.

Selon une caractéristique supplémentaire de l'invention, le jet de lubrifiant est mis sous pression au moyen d'une pompe.

Selon une caractéristique supplémentaire de l'invention, l'au moins un premier orifice de sortie du dispositif d'injection est axialement en vis-à-vis des entrées des conduits acheminant le lubrifiant jusqu'aux premiers paliers.

Cette dernière caractéristique permet de positionner l'au moins un premier orifice de sortie au plus proche des entrées de conduits, réduisant ainsi le risque de perte d'une partie de lubrifiant pendant son parcours.

Selon une caractéristique supplémentaire de l'invention, la distance axiale entre l'au moins un premier orifice de sortie et les entrées de conduits est comprise entre 2 et 30 mm.

Selon une caractéristique supplémentaire de l'invention, un dispositif de collecte est fixé sur le porte-satellites, le dispositif de collecte étant configuré pour collecter une partie du lubrifiant projeté par l'au moins un premier orifice de sortie du dispositif d'injection et pour diriger le lubrifiant collecté vers les entrées des conduits.

Ainsi, le dispositif de collecte permet d'accumuler une quantité suffisante de lubrifiant servant à assurer une alimentation régulière des premiers paliers.

Selon une caractéristique supplémentaire de l'invention, le dispositif de collecte comporte au moins un réservoir adapté pour recevoir une quantité déterminée de lubrifiant, l'au moins un réservoir comportant dans sa partie radialement interne une ouverture, l'ouverture étant positionnée radialement au-dessus de l'au moins un premier orifice de sortie du dispositif d'injection.

Selon une caractéristique supplémentaire de l'invention, l'ouverture du réservoir recouvre axialement l'au moins un premier orifice de sortie du dispositif d'injection.

Ces deux dernières caractéristiques permettent de positionner avantageusement l'ouverture de l'au moins un réservoir à proximité immédiate de l'au moins un premier orifice de sortie, ce qui permet de collecter le lubrifiant dès sa sortie du dispositif d'injection et ainsi réduire encore plus les risques de perte d'une partie de lubrifiant pendant son parcours.

Selon une caractéristique supplémentaire de l'invention, un point radialement le plus intérieur de l'ouverture de l'au moins un réservoir est positionné radialement à l'intérieur par rapport à un point radialement le plus extérieur des entrées des conduits.

Cette dernière caractéristique permet au lubrifiant de s'écouler efficacement à travers les conduits sous l'effet des forces centrifuges induites par la vitesse de rotation.

Selon un premier aspect de l'invention, le dispositif de collecte est monobloc et s'étend circonférentiellement sur un angle de 360°.

Le dispositif de collecte monobloc peut recevoir le lubrifiant projeté par l'au moins un premier orifice de sortie du dispositif d'injection quelle que soit la position angulaire du porte-satellites par rapport à l'axe de rotation, permettant ainsi d'accumuler une grande quantité de lubrifiant.

Selon un autre aspect de l'invention, le dispositif de collecte est composé de plusieurs parties distinctes, le nombre de parties distinctes correspondant de préférence au nombre de pignons satellites, chaque partie distincte comportant un réservoir distinct.

Par rapport à un dispositif de collecte monobloc, le dispositif de collecte en plusieurs parties distinctes permet une fabrication plus simple et un assemblage plus aisé sur le porte-satellites du fait des dimensions plus petites de chaque partie distincte.

De plus, le dispositif de collecte en plusieurs parties distinctes reçoit le lubrifiant projeté par l'au moins un premier orifice de sortie du dispositif d'injection uniquement aux positions angulaires du porte-satellites où l'une des desdites parties distinctes fait face axialement à l'au moins un premier orifice de sortie. La quantité de lubrifiant reçue par le dispositif de collecte peut être adaptée en ajustant les dimensions du réservoir. Dans les positions angulaires du porte-satellites où le dispositif de collecte ne reçoit pas de lubrifiant, l'au moins un premier orifice de sortie du dispositif d'injection peut être configuré pour projeter avantageusement le lubrifiant sur d'autres composants du système de transmission, comme notamment la couronne dentée ou le pignon planétaire.

Selon un aspect de l'invention, le dispositif de collecte est réalisé en matière plastique moulée.

Selon un autre aspect de l'invention, le dispositif de collecte est réalisé en métal moulé, notamment en aluminium moulé

Selon un autre aspect de l'invention, le dispositif de collecte est réalisé en métal formé à partir d'une tôle d'acier.

Selon une caractéristique supplémentaire de l'invention, le dispositif de collecte est fixé au porte-satellites par un moyen de fixation, notamment par emmanchement ou par rivetage ou par vissage ou par collage ou au moyen d'une goupille.

Selon un autre aspect de l'invention, le dispositif de collecte est réalisé monobloc avec le porte-satellites.

Selon une caractéristique supplémentaire de l'invention, le porte-satellites est supporté par la première paroi du carter de transmission via un deuxième palier, l'au moins un premier orifice de sortie du dispositif d'injection étant positionné radialement au-dessus du deuxième palier.

Cette dernière caractéristique permet d'éviter de faire transiter le jet de lubrifiant à travers le deuxième palier et ainsi pouvoir projeter ledit jet de lubrifiant directement vers les entrées des conduits.

Selon une caractéristique supplémentaire de l'invention, le carter de transmission comporte une portion cylindrique axialement en saillie, la portion cylindrique étant positionnée radialement en dessous de l'ouverture de l'au moins un réservoir du dispositif de collecte et la portion cylindrique recouvrant axialement l'ouverture de l'au moins un réservoir du dispositif de collecte.

Ainsi, une partie du lubrifiant qui se trouverait projetée sur la première paroi du carter de transmission peut s'écouler par gravité sur ladite première paroi jusqu'à la portion cylindrique puis se déverser par gravité dans l'au moins un réservoir du dispositif de collecte.

Selon une caractéristique supplémentaire de l'invention, la première paroi du carter de transmission comporte des nervures et/ou des canaux configurés pour collecter et guider le lubrifiant vers la portion cylindrique.

Selon une caractéristique supplémentaire de l'invention, la portion cylindrique axialement en saillie du carter de transmission comporte une surface radialement interne adaptée pour supporter le deuxième palier.

Selon une caractéristique supplémentaire de l'invention, le dispositif d'injection dispose d'une pluralité de premiers orifices de sortie répartis circonférentiellement, de préférence de trois à douze premiers orifices de sortie.

La pluralité d'orifices de sortie répartis circonférentiellement permet d'alimenter en lubrifiant de façon régulière et en quantité suffisante les conduits.

Selon une caractéristique supplémentaire de l'invention, le dispositif d'injection comportant au moins un deuxième orifice de sortie positionné radialement en dessous du deuxième palier.

Selon une caractéristique supplémentaire de l'invention, l'au moins un deuxième dispositif de sortie est configuré pour projeter un jet de lubrifiant vers le pignon planétaire.

Selon une caractéristique supplémentaire de l'invention, le dispositif d'injection dispose d'une pluralité de deuxièmes orifices de sortie répartis circonférentiellement, de préférence de trois à douze premiers orifices de sortie.

Grâce à ces trois dernières caractéristiques, le dispositif d'injection peut alimenter en lubrifiant en quantité suffisante et régulièrement les dentures du pignon planétaire et des pignons satellites.

Selon une caractéristique supplémentaire de l'invention:
- le système de transmission de couple comprend en outre un boîtier de différentiel ;
- le pignon planétaire est lié en rotation à l'arbre d'entraînement ;
- le porte-satellites est lié en rotation au boîtier de différentiel ;
- la couronne dentée extérieure est fixée au carter de transmission ; et
- le boîtier de différentiel est supporté par le carter de transmission via au moins un troisième palier.

La structure du système de transmission de couple suivant cette dernière caractéristique permet de réaliser un réducteur de vitesses ayant un ratio de réduction important dans un encombrement faible.

Selon une caractéristique supplémentaire de l'invention, le porte-satellites est issu de matière avec le boîtier de différentiel.

Ainsi, la conception monobloc du porte-satellites avec le boîtier de différentiel permet de supprimer un composant, rendant ainsi la structure du système de transmission de couple plus simple et économique à réaliser. En outre, la qualité du train planétaire est améliorée car la chaîne de tolérances de fabrication est réduite.

L'invention concerne en outre un groupe motopropulseur comprenant :
- un lubrifiant ;
- un système de transmission de couple tel que décrit précédemment ;
- une machine électrique tournante configurée pour entraîner en rotation l'arbre d'entraînement ;
- un carter moteur logeant la machine électrique tournante.

L'invention concerne en outre un groupe motopropulseur comprenant :
- un lubrifiant ;
- un système de transmission de couple tel que décrit précédemment ;
- une machine électrique tournante entraînant en rotation l'arbre d'entraînement ;
- un carter moteur logeant la machine électrique tournante.

Selon une caractéristique supplémentaire de l'invention, le lubrifiant est une huile.

Selon une caractéristique supplémentaire de l'invention, le carter de transmission est fixé sur le carter moteur.

Selon une caractéristique supplémentaire de l'invention, la première paroi du carter de transmission constitue également une paroi du carter moteur.

Selon une caractéristique supplémentaire de l'invention, le lubrifiant projeté par l'au moins un premier orifice de sortie du dispositif d'injection provient du carter moteur ou d'une chambre aménagée dans le carter moteur et/ou dans le carter de transmission.

Par « provient », on entend ici que le lubrifiant est préalablement stocké et/ou réalise préalablement un parcours au sein du carter moteur ou au sein d'une chambre aménagée dans le carter moteur et/ou dans le carter de transmission pour être conduit ensuite jusqu'au moins un premier orifice de sortie du dispositif d'injection.

Par conséquent, un seul lubrifiant commun peut être utilisé pour servir à la fois à la lubrification et/ou au refroidissement du système de transmission de couple et de la machine électrique tournante.

Selon une caractéristique supplémentaire de l'invention, le lubrifiant est apte à être injecté et/ou prélevé dans le carter de transmission et/ou dans le carter moteur au moyen d'une pompe.

Selon une caractéristique supplémentaire de l'invention, le lubrifiant est injecté et/ou prélevé dans le carter de transmission et/ou dans le carter moteur au moyen d'une pompe.

L'utilisation d'une pompe permet une lubrification dite « active » qui assure la distribution d'une quantité de lubrifiant localisée et limitée au juste nécessaire au sein du groupe motopropulseur et ainsi réduire les pertes de rendement dues au barbotage des composants dans le lubrifiant, contrairement à une lubrification sans pompe dite « passive » qui utilise un principe de lubrification par gravité nécessitant une quantité de lubrifiant plus importante.

Selon une caractéristique supplémentaire de l'invention, la machine électrique tournante est coaxiale à l'arbre d'entraînement.

Cette structure permet d'améliorer la compacité globale du groupe motopropulseur, tout en assurant une lubrification efficace des composants dudit groupe motopropulseur grâce à l'invention telle que décrite précédemment.

Le système de transmission de couple selon l'invention peut présenter l'une ou l'autre des caractéristiques décrites ci-dessous combinées entre elles ou prises indépendamment les unes des autres :
- le premier palier et/ou le deuxième palier et/ou le troisième palier sont des roulements à aiguilles ou des roulements à billes ou des roulements à rouleaux ou des paliers lisses.
- chaque pignon satellite est un double pignon satellite comprenant un grand pignon satellite et un petit pignon satellite ayant un diamètre inférieur au grand pignon satellite, le grand pignon satellite et le petit pignon satellite étant liés en rotation et disposés axialement côte à côte, le grand pignon satellite étant engrené avec le pignon planétaire et le petit pignon satellite étant engrené avec la couronne dentée extérieure ;
- le jeu d'engrenages du différentiel est formé par des pignons coniques, ou par des pignons droits à dentures hélicoïdales ou droites, ou par des engrenages à vis sans fin, ou par des engrenages cylindriques agencés sous forme de train planétaires ;
- le différentiel est un différentiel de type autobloquant ou de type à glissement limité.

L'invention concerne en outre une méthode de lubrification pour un système de transmission de couple ou pour un groupe motopropulseur tels que décrits précédemment, dans laquelle le jet de lubrifiant est injecté par l'au moins un premier orifice de sortie du dispositif d'injection a une pression comprise entre 1 et 20 bar, de préférence une pression comprise entre 1,5 et 6 bar.

L'invention concerne en outre une méthode de lubrification pour un système de transmission de couple ou pour un groupe motopropulseur tels que décrits précédemment, dans laquelle le lubrifiant est injecté et/ou prélevé dans le carter de transmission et/ou dans le carter moteur au moyen d'une pompe.

### Brève description des figures

La figure 1 est une vue en coupe brisée d'un groupe motopropulseur comprenant d'un mode de réalisation d'un système de transmission de couple selon l'invention.
La figure 2 est une vue en coupe brisée d'un mode de réalisation d'un système de transmission de couple selon l'invention.
La figure 3 est une vue agrandie de la figure 2.
La figure 4 est une vue isométrique d'un train planétaire d'un mode de réalisation d'un système de transmission de couple selon l'invention.
La figure 5 est une vue isométrique en coupe d'un carter de transmission d'un mode de réalisation d'un système de transmission de couple selon l'invention.
La figure 6 est une vue isométrique d'un dispositif de collecte d'un mode de réalisation d'un système de transmission de couple selon l'invention.

### Description des modes de réalisation

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

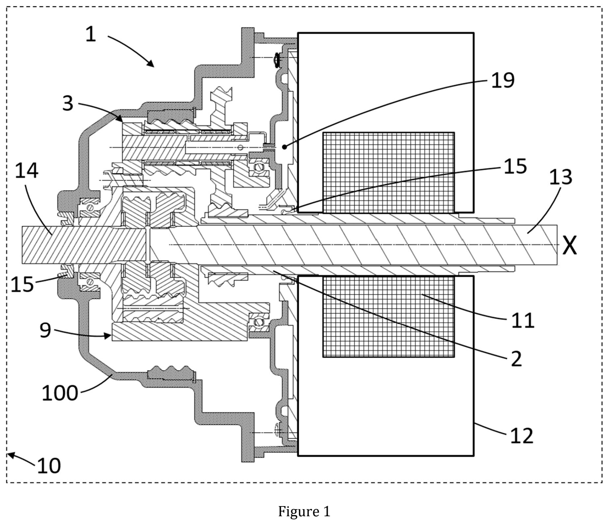

La figure 1 illustre un groupe motopropulseur 10 selon un mode de réalisation de l'invention. Le groupe motopropulseur 1 comporte une machine électrique tournante 11 couplée à un système de transmission de couple 1 destiné à entraîner en rotation deux demi-arbres de roues 13 et 14 d'un essieu d'un véhicule.

Un tel groupe motopropulseur 10 est par exemple destiné à un véhicule hybride. Ainsi, le groupe motopropulseur 10 est, par exemple, apte à transmettre un couple d'une machine électrique tournante 11 vers un essieu arrière ou avant du véhicule tandis qu'un autre groupe motopropulseur accouplé à un autre moteur, tel qu'un moteur thermique, permet de générer un couple et de le transmettre entre cet autre moteur et des demi-arbres de roues de l'autre essieu du véhicule. Le véhicule peut également être intégralement électrique et comporter un ou plusieurs essieux motorisés.

Le système de transmission de couple 1 a une fonction de réducteur de vitesse. Pour conférer au véhicule de bonnes performances en vitesse et en couple en limitant les pertes, tout en permettant à la machine électrique tournante 11 de fonctionner dans une plage de fonctionnement en vitesse et couple qui soit favorable, le système de transmission de couple 1 a vocation à permettre d'établir un rapport de vitesses entre la machine électrique tournante 11 et les demi-arbres de roues 13 et 14 du véhicule.

A cet effet, le système de transmission de couple 1 comprend un carter de transmission 100 dans lequel sont logés un arbre d'entraînement 2 ayant un axe de rotation X, un train planétaire 3 et un différentiel 9. L'arbre d'entraînement 2, le train planétaire 3 et le différentiel 9 peuvent être coaxiaux à l'axe de rotation X. Des joints d'étanchéité 15 peuvent permettre de rendre le carter de transmission 100 étanche.

Dans le mode de réalisation de la figure 1, la machine électrique tournante 11 est coaxiale à l'arbre d'entraînement 2 et entraîne en rotation l'arbre d'entraînement 2. L'arbre d'entraînement 2 peut être creux. Un demi arbre de roue 13 est coaxial de l'arbre d'entraînement 2 et passe axialement à l'intérieur de l'arbre d'entraînement 2 creux.

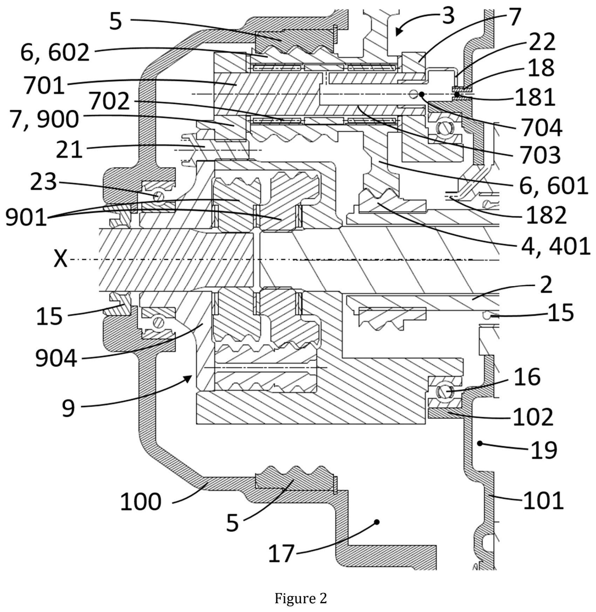

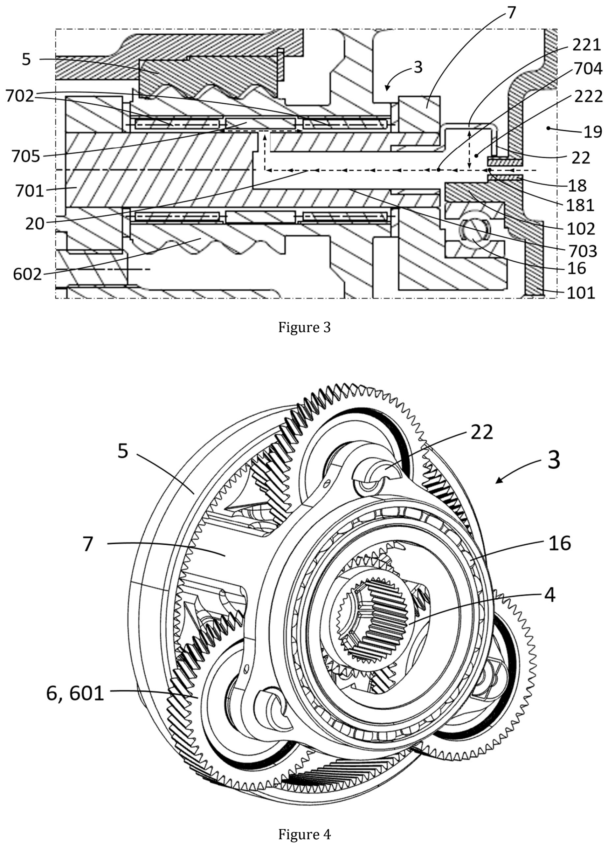

Comme illustré par les figures 2 et 3, le train planétaire, appelé également de façon connue « train épicycloïdal », comporte un pignon planétaire 4, une couronne dentée extérieure 5, une pluralité de pignons satellites 6 s'engrenant avec le pignon planétaire 4 et la couronne dentée extérieure 5, et un porte-satellites 7 sur lequel la pluralité de pignons satellites 6 sont montés pivotants.

Dans ce mode de réalisation, les pignons satellites 6 sont au nombre de trois et sont montés pivotants par leurs bords radialement internes sur des axes 701 du porte-satellites 7 via des premiers paliers 702, ici des roulements à aiguilles. Pour chaque pignon satellite 6, deux premiers paliers 702 peuvent être utilisés, les deux premiers paliers 702 pouvant être positionnés axialement l'un par rapport à l'autre via une entretoise cylindrique 705. Les axes 701 du porte-satellites 7 comportent des conduits 703 configurés pour acheminer un lubrifiant depuis des entrées 704 desdits conduits 703 vers les premiers paliers 702.

Dans un autre mode de réalisation non représenté, les pignons satellites peuvent être montés pivotants par leurs bords radialement externes sur le porte-satellites via des premiers paliers, notamment des roulements à aiguilles. Dans ce cas, les conduits configurés pour acheminer un lubrifiant depuis des entrées desdits conduits vers les premiers paliers sont aménagés dans les pignons satellites.

Comme illustré par les figures 1 à 4, le différentiel 9 peut comporter un boîtier 900 logeant un jeu d'engrenages 901 configuré pour distribuer le couple fourni par la machine électrique tournante 11 vers les demi-arbres de roues 13 et 14 en les autorisant à tourner à des vitesses différentes. Le jeu d'engrenages 901 du différentiel 9 peut être un agencement d'engrenages de type engrenages à vis sans fin. De manière connue, ce type de différentiel est notamment appelé différentiel « Torsen », avantageusement utilisé pour sa compacité et/ou sa fonction de glissement limité. La structure du boîtier du différentiel 900 peut être monobloc ou composée de plusieurs sous-parties 900 et 904 fixées entre elles, par exemple par des vis 21. Le porte-satellites 7 peut être issu de matière avec le boîtier de différentiel 900, par exemple obtenu par un procédé de fonderie. Le boîtier de différentiel 900 et/ou le porte-satellites 7 peuvent être supportés et guidés en rotation sur le carter de transmission 100 via un deuxième palier 16 et un troisième palier 23, le deuxième palier 16 et le troisième palier 23 étant ici des roulements à billes.

Dans le mode de réalisation des figures 2 à 4, le pignon planétaire 4 est lié en rotation à l'arbre d'entraînement 2 par exemple par une cannelure. Le pignon planétaire 4 est verrouillé axialement en translation par exemple par un anneau d'arrêt. Le porte-satellites 7 est lié en rotation au boîtier de différentiel 900. La couronne dentée extérieure 5 est fixée au carter de transmission 100, par exemple par frettage.

Dans le mode de réalisation des figures 2 à 4, les pignons satellites 6 sont des double pignons satellites comprenant chacun un grand pignon satellite 601 et un petit pignon satellite 602 ayant un diamètre inférieur à celui du grand pignon satellite 601, le grand pignon satellite 601 et le petit pignon satellite 602 étant liés en rotation et disposés axialement côte à côte, le grand pignon satellite 601 étant engrené avec le pignon planétaire 4 et le petit pignon 602 satellite étant engrené avec la couronne dentée extérieure 5. De manière connue, cette configuration de train planétaire est appelée « train planétaire de type 2 ».

Un lubrifiant est utilisé pour lubrifier les composants du système de transmission de couple 1. Le lubrifiant peut être par exemple une huile.

Comme illustré par les figures 2 et 3, le carter de transmission 100 comporte une première paroi 101 supportant un dispositif d'injection 18, le dispositif d'injection 18 comportant au moins un premier orifice de sortie 181 configuré pour projeter un jet de lubrifiant directement vers au moins une des entrées 704 des conduits 703 aménagés dans les axes 701 du porte-satellites 7. L'au moins un premier orifice de sortie 181 du dispositif d'injection 18 peut être axialement en vis-à-vis des entrées 704 des conduits 703. Dans cet exemple de réalisation, le dispositif d'injection 18 est réalisé sous la forme d'un insert en plastique de forme cylindrique fixé par emmanchement dans la première paroi 101.

Comme illustré par les figures 2, 3 et 6, un dispositif de collecte 22 peut être fixé sur le porte-satellites 7, le dispositif de collecte 22 étant configuré pour collecter une partie du lubrifiant projeté par l'au moins un premier orifice de sortie 181 du dispositif d'injection 18 et pour diriger le lubrifiant vers les entrées 704 des conduits 703. Le dispositif de collecte 22 peut comporter au moins un réservoir 221 adapté pour recevoir une quantité déterminée de lubrifiant, l'au moins un réservoir 221 comportant dans sa partie radialement interne une ouverture 222, l'ouverture 222 étant positionnée radialement au-dessus de l'au moins un premier orifice de sortie 181 du dispositif d'injection 18 et l'ouverture 222 recouvrant axialement l'au moins un premier orifice de sortie 181 du dispositif d'injection 18. Sur la figure 3 est illustré le parcours 20 (symbolisé par des flèches) du lubrifiant depuis le dispositif d'injection 18 jusqu'aux premiers paliers 702.

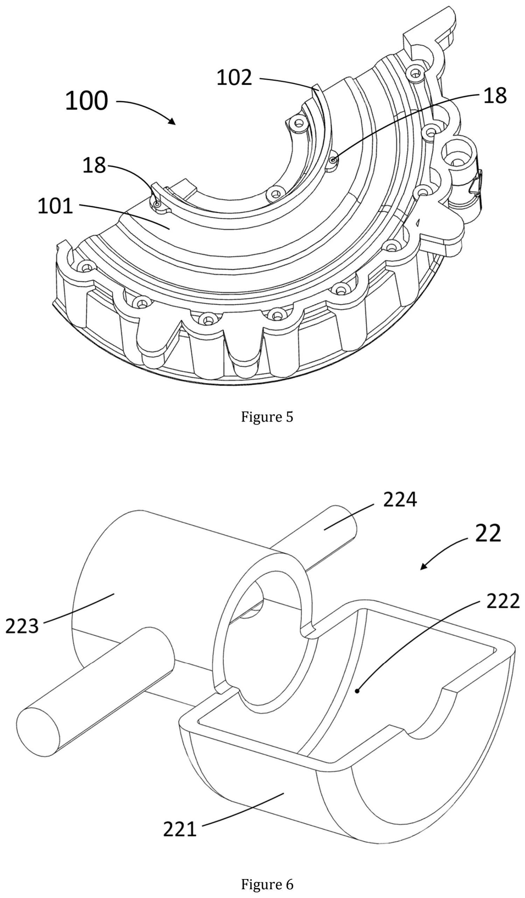

Dans le mode de réalisation des figures 4 et 6, le dispositif de dispositif de collecte 22 peut être composé de plusieurs parties distinctes, par exemple ici trois parties distinctes, le nombre de parties distinctes correspondant de préférence au nombre de pignons satellites 6, chaque partie distincte comportant un réservoir 221 distinct. Chaque partie distincte du dispositif de collecte 22 peut comporter une paroi de fixation 223 adaptée pour s'emmancher dans le conduit 703 d'un axe 701 du porte-satellites 7. Afin de bloquer la rotation du dispositif de collecte 22 par rapport au porte-satellites 7, une goupille de fixation 224 passant à travers la paroi de fixation 223 du dispositif de collecte 22 et à travers l'axe 701 peut être utilisée, notamment une goupille cylindrique épaulée.

Dans un mode de réalisation non représenté, le dispositif de collecte peut être monobloc et s'étendre circonférentiellement sur un angle de 360°. Le dispositif de collecte peut alors être fixé sur les axes 701 du porte-satellites 7 via des moyens de fixations adaptés.

Comme illustré par les figures 2, 3 et 5, le porte-satellites 7 peut être supporté par la première paroi 101 du carter de transmission 100 via le deuxième palier 16, l'au moins un premier orifice de sortie 181 du dispositif d'injection 18 étant positionné radialement au-dessus du deuxième palier 16. Le carter de transmission 100 peut comporter une portion cylindrique 102 axialement en saillie. La portion cylindrique 102 peut être positionnée radialement en dessous de l'ouverture 222 de l'au moins un réservoir 221 du dispositif de collecte 22 et la portion cylindrique 102 peut recouvrir axialement l'ouverture 222 de l'au moins un réservoir 221 du dispositif de collecte 22. La portion cylindrique 102 axialement en saillie du carter de transmission 100 peut comporter une surface radialement interne adaptée pour supporter le deuxième palier 16. Le dispositif d'injection 18 peut comporter au moins un deuxième orifice de sortie 182 positionné radialement en dessous du deuxième palier 16. Le deuxième dispositif de sortie 182 peut être configuré pour projeter un jet de lubrifiant vers le pignon planétaire 4.

Comme illustré par les figures 1 et 2, le lubrifiant projeté par l'au moins un premier orifice de sortie 181 du dispositif d'injection 18 peut provenir préalablement d'une chambre 19 du carter de transmission 100. Le lubrifiant contenu dans la chambre 19 peut être aussi utilisé pour la lubrification et/ou le refroidissement de la machine électrique tournante 11. Le lubrifiant peut être mis sous pression et injecté dans la chambre 19 au moyen d'une pompe (non représentée). Le carter de transmission 100 peut comporter, dans une partie basse, un bac collecteur 17 dans lequel le lubrifiant aboutit sous l'effet de la gravité après avoir circulé dans le système de transmission de couple 1. La pompe peut récupérer le lubrifiant dans le bac collecteur 17 pour ensuite le réinjecter à nouveau dans la chambre 19.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

L'usage du verbe « comporter », « comprendre » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Système de transmission de couple (1) pour véhicule comprenant :
- un arbre d'entraînement (2) ayant un axe de rotation (X) ;
- un carter de transmission (100) ;
- un train planétaire (3) comprenant un pignon planétaire (4), une couronne dentée extérieure (5), une pluralité de pignons satellites (6) s'engrenant avec le pignon planétaire (4) et la couronne dentée extérieure (5), et un porte-satellites (7) sur lequel les pignons satellites (6) sont montés pivotants via des premiers paliers (702), le porte-satellites (7) ou les pignons satellites (6) comportant une pluralité de conduits (703) configurés pour acheminer un lubrifiant depuis des entrées (704) desdits conduits (703) jusqu'aux premiers paliers (702) ; et
- un dispositif d'injection (18), le carter de transmission (100) comportant une première paroi (101) supportant le dispositif d'injection (18), le dispositif d'injection (18) comportant au moins un premier orifice de sortie (181) configuré pour projeter un jet de lubrifiant directement vers au moins une des entrées (704) des conduits (703) ;
**caractérisé en ce qu'**un dispositif de collecte (22) est fixé sur le porte-satellites (7), le dispositif de collecte (22) étant configuré pour collecter une partie du lubrifiant projeté par l'au moins un premier orifice de sortie (181) du dispositif d'injection (18) et pour diriger le lubrifiant vers les entrées (704) des conduits (703).

2. Système de transmission de couple (1) selon la revendication 1, dans lequel l'au moins un premier orifice de sortie (181) du dispositif d'injection (18) est axialement en vis-à-vis des entrées (704) des conduits (703).

3. Système de transmission de couple (1) selon l'une quelconque des revendications précédentes, dans lequel le dispositif d'injection (18) est apte à injecter le jet de lubrifiant par l'au moins un premier orifice de sortie (181) du dispositif d'injection (18) a une pression comprise entre 1 et 20 bar, de préférence une pression comprise entre 1,5 et 6 bar.

4. Système de transmission de couple (1) selon l'une quelconque des revendications précédentes, dans lequel le dispositif de collecte (22) comporte au moins un réservoir (221) adapté pour recevoir une quantité déterminée de lubrifiant, l'au moins un réservoir (221) comportant dans sa partie radialement interne une ouverture (222), l'ouverture (222) étant positionnée radialement au-dessus de l'au moins un premier orifice de sortie (181) du dispositif d'injection (18).

5. Système de transmission de couple (1) selon la revendication 4, dans lequel l'ouverture (222) recouvre axialement l'au moins un premier orifice de sortie (181) du dispositif d'injection (18).

6. Système de transmission de couple (1) selon la revendication 4 ou 5, dans lequel le dispositif de collecte (22) est composé de plusieurs parties distinctes, le nombre de parties distinctes correspondant de préférence au nombre de pignons satellites (6), chaque partie distincte comportant un réservoir (221) distinct.

7. Système de transmission de couple (1) selon l'une quelconque des revendications précédentes, dans lequel le porte-satellites (7) est supporté par la première paroi (101) du carter de transmission (100) via un deuxième palier (16), l'au moins un premier orifice de sortie (181) du dispositif d'injection (18) étant positionné radialement au-dessus du deuxième palier (16).

8. Système de transmission de couple (1) selon l'une quelconque des revendications précédentes combinée à la revendication 4, dans lequel le carter de transmission (100) comporte une portion cylindrique (102) axialement en saillie, la portion cylindrique (102) étant positionnée radialement en dessous de l'ouverture (222) de l'au moins un réservoir (221) du dispositif de collecte (22) et la portion cylindrique (102) recouvrant axialement l'ouverture (222) de l'au moins un réservoir (221) du dispositif de collecte (22).

9. Système de transmission de couple (1) selon l'une quelconque des revendications précédentes, dans lequel le dispositif d'injection (18) dispose d'une pluralité de premiers orifices de sortie (181) répartis circonférentiellement, de préférence de trois à douze premiers orifices de sortie (181).

10. Système de transmission de couple (1) selon l'une quelconque des revendications précédentes, dans lequel :
- ledit système de transmission de couple (1) comprend en outre un boîtier de différentiel (9) ;
- le pignon planétaire (4) est lié en rotation à l'arbre d'entraînement (2) ;
- le porte-satellites (7) est lié en rotation au boîtier de différentiel (9) ;
- la couronne dentée extérieure (5) est fixée au carter de transmission (100) ; et
- le boîtier de différentiel (900) est supporté par le carter de transmission (100) via au moins un troisième palier (23).

11. Groupe motopropulseur (10) comprenant :
- un lubrifiant ;
- un système de transmission de couple (1) selon l'une quelconque des revendications précédentes ;
- une machine électrique tournante (11) entraînant en rotation l'arbre d'entraînement (2) ;
- un carter moteur (12) logeant la machine électrique tournante (11).

12. Groupe motopropulseur (10) selon la revendication 11, dans lequel le lubrifiant projeté par l'au moins un premier orifice de sortie (181) du dispositif d'injection (18) provient du carter moteur (12) ou d'une chambre (19) aménagée dans le carter moteur (12) et/ou dans le carter de transmission (100).

13. Groupe motopropulseur (10) selon la revendication 11 ou 12, dans lequel le lubrifiant est apte à être injecté et/ou prélevé dans le carter de transmission (100) et/ou dans le carter moteur (12) au moyen d'une pompe.

14. Groupe motopropulseur (10) selon l'une quelconque des revendications 11 à 13, dans lequel la machine électrique tournante (11) est coaxiale à l'arbre d'entraînement (2).
